# EUROPEAN PATENT APPLICATION

(11) **EP 4 501 581 A1**
(43) Date of publication of application: **05.02.2025**
(21) Application number: 23216191.9
(22) Date of filing: 13.12.2023
(51) Int. Cl.: B29C 48/285, B29C 48/295, B29C 44/34, B29C 48/38, B29C 48/535, B29B 7/88, B29B 7/94

(54) **EXTRUSION APPARATUS**

(30) Priority: 04.08.2023 TW 112208212 U
(71) Applicant: Chou, Yen-Ju, 70268 Tainan City (TW)
(72) Inventor: Chou, Yen-Ju, 70268 Tainan City (TW)
(74) Representative: Murgitroyd & Company

(57) **Abstract**

An extrusion apparatus includes a conveyer unit (2) that includes an outer tube (8) sleeved on a conveying threaded rod (7). The outer tube (8) has a first tube portion (81) and a second tube portion (82). A feeding unit (5) is connected to the first tube portion (81) to feed a base material into a space between the conveying threaded rod (7) and the outer tube (8). An extruding unit (4) is connected to the conveyer unit (2) opposite to the feeding unit (5). A plurality of fluid input units (61) are connected to the second tube portion (82) to introduce supercritical fluids into the space between the threaded rod (7) and the outer tube (8) so that the base material and the supercritical fluids are mixed to be extruded by the extruding unit (4).

## Description

The disclosure relates to an extrusion apparatus, and more particularly to an extrusion apparatus in cooperation with supercritical fluids.

Figure 1 illustrates an extrusion apparatus, as disclosed in Taiwanese Patent Publication No. M551971, in cooperation with supercritical fluids. The extrusion apparatus is adapted to extrude a melted and foamed base material mixed with the supercritical fluids into a finished product. The extrusion apparatus includes a first mixing mechanism 11, a second mixing mechanism 12 spaced apart from the first mixing mechanism 11, and a connecting mechanism 13 connected to the first mixing mechanism 11 and the second mixing mechanism 12.

The first mixing mechanism 11 includes a first conveying unit 111, a feeding unit 112 disposed upstream of the first conveying unit 111 to feed a base material into the first conveying unit 111, a drive unit 113 disposed adjacent to the feed unit 112 to drive the conveying unit 111, and a first fluid input unit 114 disposed downstream of the conveying unit 111.

The second mixing mechanism 12 includes a second conveying unit 121 connected to the connecting mechanism 13, and an extruding unit 122 disposed downstream of the second conveying unit 121.

The connecting mechanism 13 includes a communication unit 131 communicating with the first conveying unit 111 and the second conveying unit 121, and a second fluid input unit 132 communicating with the communication unit 131.

When the base material is fed by the feeding unit 112 and conveyed, the first fluid input unit 114 is adapted to introduce the supercritical fluids, such as carbon dioxide gases or nitrogen gases, into the first conveying unit 111, and the second fluid input unit 132 is adapted to introduce the supercritical fluids, such as carbon dioxide gases or nitrogen gases, into the communication unit 131, so that the base material may be mixed with the supercritical fluids to become a foam matter to be extruded into the finished product, such as an insole. However, there is room to be improved.

Therefore, an object of the disclosure is to provide an extrusion apparatus that can alleviate at least one of the drawbacks of the prior art.

According to an aspect of the disclosure, there is provided an extrusion apparatus according to Claim 1.

Other features and advantages of the disclosure will become apparent in the following detailed description of the embodiment(s) with reference to the accompanying drawings. It is noted that various features may not be drawn to scale.

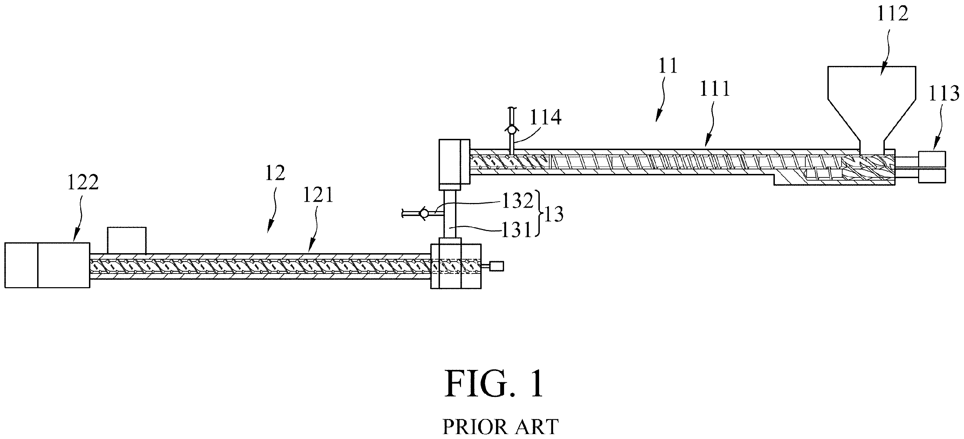

Figure 1 is a partly sectional view illustrating an extrusion apparatus, as disclosed in Taiwanese Patent Publication No. M551971.
Figure 2 is a partly sectional view illustrating an extrusion apparatus according to a first embodiment of the disclosure.
Figure 3 is an enlarged partly sectional view of the first embodiment illustrating a conveyer unit, a feeding unit, and a drive unit of the extrusion apparatus.
Figure 4 is an enlarged partly sectional view of the first embodiment illustrating a plurality of first fluid input units and the conveyer unit of the extrusion apparatus.
Figure 5 is an enlarged partly sectional view of the first embodiment illustrating an outer tube, a threaded rod, and one of the first fluid input units of the extrusion apparatus.
Figure 6 is another enlarged partly sectional view of the first embodiment illustrating the outer tube, the threaded rod, and one of the first fluid input units of the extrusion apparatus.
Figure 7 is still another enlarged partly sectional view of the first embodiment illustrating the outer tube, the threaded rod, and one of the first fluid input units of the extrusion apparatus.
Figure 8 is a partly sectional view illustrating an extrusion apparatus according to a second embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

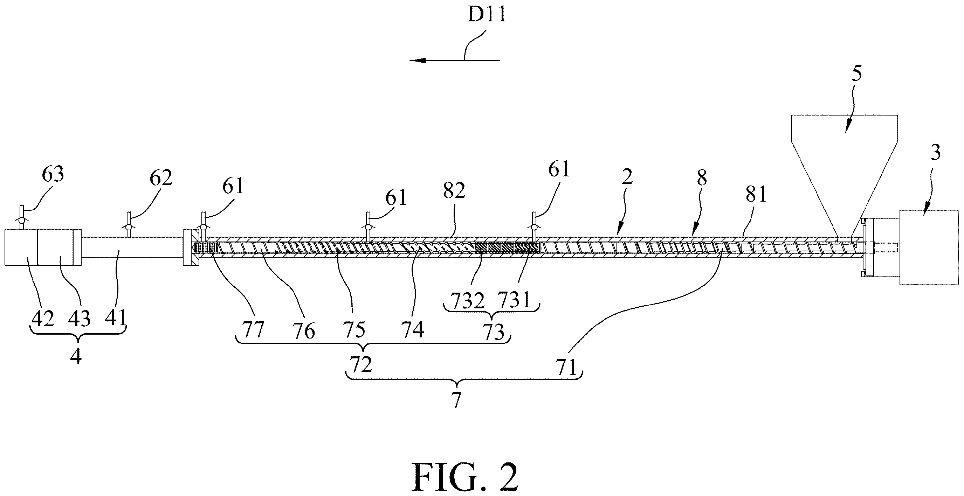

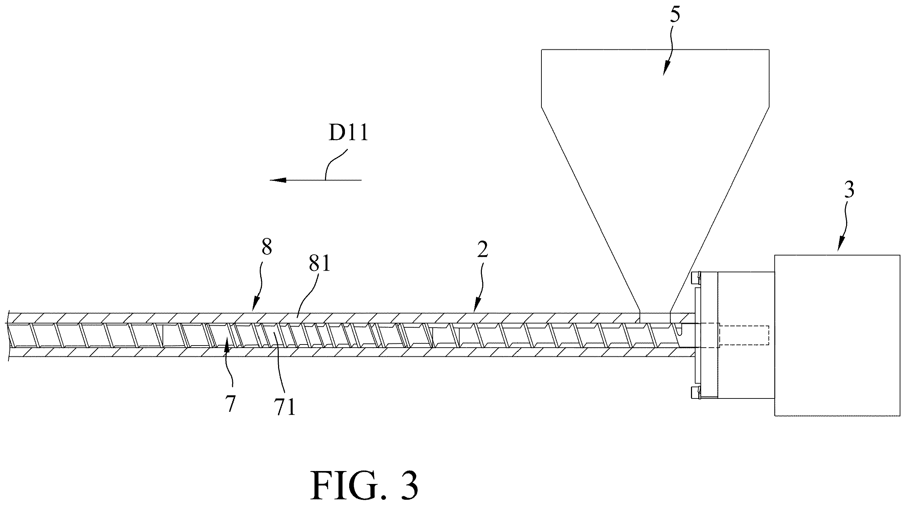

Referring to Figures 2 to 4, an extrusion apparatus according to a first embodiment of the disclosure is adapted to cooperate with a base material and supercritical fluids to extrude a product. In this embodiment, the base material is a granular plastic material, the supercritical fluids may be carbon dioxide gases, and the product may be an insole. In some cases, the supercritical fluids may be inert gases or nitrogen gases.

In this embodiment, the extrusion apparatus includes a conveyer unit 2, a drive unit 3, an extruding unit 4, a feeding unit 5, a plurality of first fluid input units 61, a second fluid input unit 62, and a third fluid input unit 63.

The conveyer unit 2 extends in a conveying direction (D11), and includes a conveying threaded rod 7 and an outer tube 8.

The conveying threaded rod 7 extends in the conveying direction (D11), and has a first rod body 71 and a second rod body 72. The first rod body 71 of the threaded rod 7 is equal in length to the second rod body 72.

The first rod body 71 of the threaded rod 7 has an outer thread, which is divided into three thread regions. A first one of the three thread regions has a sparse configuration, a second one of the three thread regions has a dense configuration, and a third one of the three thread regions has a sparse configuration. The three thread regions are disposed sequentially in such order in the conveying direction (D11).

As shown in Figures 2, 4, and 5, the second rod body 72 has a first rod segment 73, a second rod segment 74, a third rod segment 75, a fourth rod segment 76, and a fifth rod segment 77 that are arranged in the conveying direction (D11), and that are integrally connected to one another. The first rod segment 73, the second rod segment 74, the third rod segment 75, the fourth rod segment 76, and the fifth rod segment 77 are different in outer thread from each other.

The first rod segment 73 has an external thread pitch that is smaller than an external thread pitch of each of the second rod segment 74, the third rod segment 75, and the fourth rod segment 76. In this embodiment, the first rod segment 73 of the second rod body 72 includes a head section 731 that is connected to the first rod body 71, and a tail section 732 that interconnects the head section 731 and the second rod segment 74 of the second rod body 72. The head section 731 has a first external thread lead angle (A11) that is smaller than a second external thread lead angle (A12) of the tail section 732.

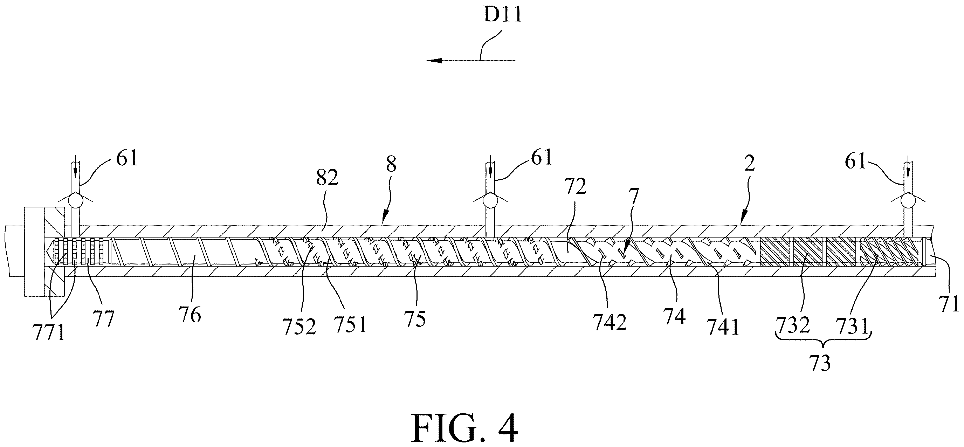

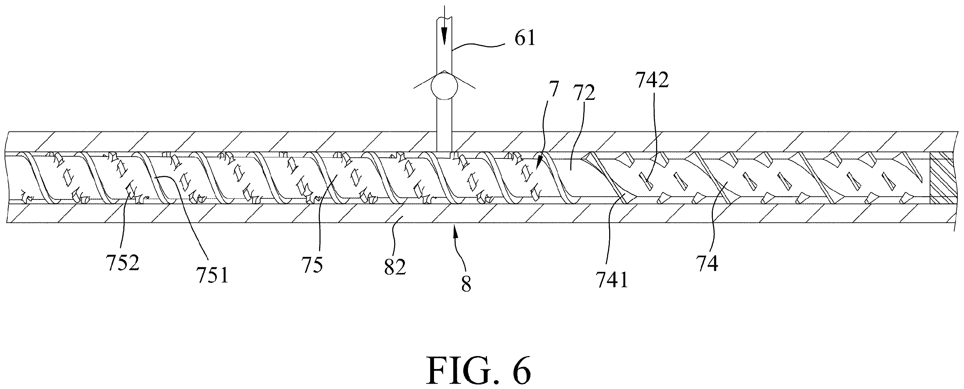

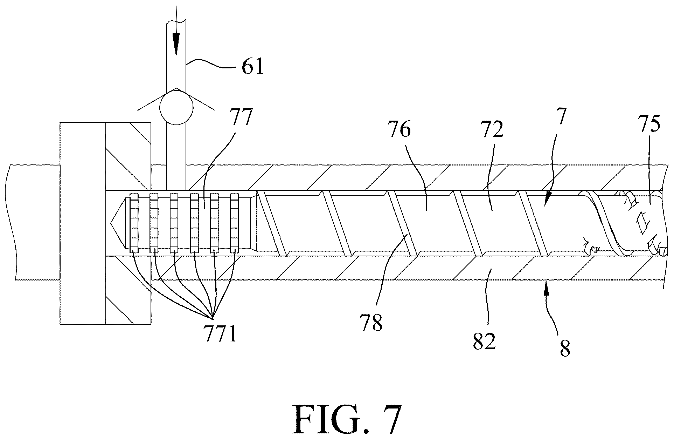

As shown in Figures 4, 6, and 7, the second rod segment 74 has a first external thread 741 that is continuous, and a second external thread 742 that is discontinuous. The first external thread 741 and the second external thread 742 cooperate with each other to form a double thread.

The third rod segment 75 has a first outer thread 751 that is continuous, and a second outer thread 752 that is discontinuous. The first outer thread 751 and the second outer thread 752 cooperate with each other to form a double thread.

The fifth rod segment 77 has a plurality of ring protrusions 771 that are spaced apart from each other in the conveying direction (D11).

Referring back to Figure 2, the outer tube 8 is sleeved on the conveying threaded rod 7, and has a first tube portion 81 and a second tube portion 82 disposed downstream of the first tube portion 81 in the conveying direction (D11). The first tube portion 81 of the outer tube 8 is equal in length to the second tube portion 82. In this embodiment, the first rod body 71 and the second rod body 72 of the threaded rod 7 are respectively surrounded by the first tube portion 81 and the second tube portion 82. The first rod segment 73, the second rod segment 74, the third rod segment 75, the fourth rod segment 76, and the fifth rod segment 77 of the second rod body 72 are surrounded by the second tube portion 82 of the outer tube 8. Each of the ring protrusions 771 of the fifth rod segment 77 of the second rod body 72 is spaced apart from an inner surface of the second tube portion 82 of the outer tube 8.

The drive unit 3 is disposed upstream of the conveyer unit 2 in the conveying direction (D11). The first rod body 71 of the conveying threaded rod 7 has an end that is opposite to the second rod body 72 and that is connected to the drive unit 3 so that the drive unit 3 may drive rotation of the conveying threaded rod 7.

The extruding unit 4 is connected to an end of said conveyer unit 2 opposite to the feeding unit 5 and the drive unit 3 in the conveying direction (D11). In this embodiment, the extruding unit 4 has a cooling subunit 41, a mold subunit 42, and a pumping subunit 43. The cooling subunit 41 is assembled to an end of the second tube portion 82 of the outer tube 8 opposite to the first tube portion 81. The mold subunit 42 is spaced apart from the cooling subunit 41. The pumping subunit 43 is a gear pump that interconnects the cooling subunit 41 and the mold subunit 42. Since structure and operation of the cooling subunit 41, the mold subunit 42, and the pumping subunit 43 are well known in the art, details thereof are omitted hereinafter.

The feeding unit 5 is connected to the first tube portion 81 and is disposed adjacent to the drive unit 3. In this embodiment, the feeding unit 5 is adapted to feed the base material into a space between the conveying threaded rod 7 and the outer tube 8.

The first fluid input units 61 are spaced apart from each other in the conveying direction (D11) and are connected to the second tube portion 82 of the outer tube 8. In this embodiment, the first fluid input units 61 communicate with the second tube portion 82 of the outer tube 8, and are respectively aligned with the first rod segment 73, the third rod segment 75, and the fifth rod segment 77. The first fluid input units 61 are adapted to introduce the supercritical fluids into the space between the threaded rod 7 and the outer tube 8. A number of the first fluid input units 61 is three.

The second fluid input unit 62 is connected to the cooling subunit 41 and is adapted to introduce the supercritical fluids into the cooling subunit 41. The third fluid input unit 63 is connected to the mold subunit 42 and is adapted to introduce the supercritical fluids to the mold subunit 42.

During operation of the extrusion apparatus, the feeding unit 5 feeds the base material into the space between the conveying threaded rod 7 and the outer tube 8. The conveying threaded rod 7 is driven by the drive unit 3 to rotate for conveying in the conveying direction (D1) the base material that is fed by the feeding unit 5 and that is melted (which becomes a melted base material) by a heating device (not shown ) disposed in the outer tube 8.

The melted base material is conveyed by the first rod body 71 of the threaded rod 7 between the second rod body 72 of the threaded rod 7 and the second tube portion 82 of the outer tube 8, and is conveyed by the second rod body 72 toward the extruding unit 4. By virtue of the first fluid input units 61 introducing the supercritical fluids, when the melted base material is conveyed through the first rod segment 73, the third rod segment 75, and the fifth rod segment 77, the melted base material is mixed with the supercritical fluids to foam. Specifically, the melted base material mixed with the supercritical fluids may form cavities/pores that are generated by the supercritical fluids, thereby producing a foaming effect.

In this embodiment, the cooling subunit 41 is adapted to cool the base material that is conveyed from the conveyer unit 2, that is melted, and that is mixed with the supercritical fluids for extrusion molding. The pumping subunit 43 is adapted for transporting the base material that is conveyed from the conveyer unit 2, that is melted, and that is mixed with the supercritical fluids. The mold subunit 42 is adapted for extrusion of the base material that is conveyed from the conveyer unit 2, that is melted, that is mixed with the supercritical fluids, and that is cooled by the cooling subunit 41. Furthermore, the pumping assembly 43 may provide appropriate pressure for extrusion of the melted base material mixed with the supercritical fluids from the mold subunit 42 into a mold to obtain a finished product. By virtue of the second input unit 62 and the third input unit 63 introducing the supercritical fluids into the cooling subunit 41 and the mold subunit 42, the supercritical fluids may be mixed with the base material that is conveyed from the conveyer unit 2, that is melted, and that is mixed with the supercritical fluids, thereby enhancing the foaming effect as the melted base material and the supercritical fluids are mixed to be extruded by the extruding unit 4.

During a period of extrusion, a ratio of a weight of the supercritical fluids introduced by a first one of the three first fluid input units 61 to a weight of the base material extruded by the mold subunit 42 is 0.015, a ratio of a weight of the supercritical fluids introduced by a second one of the three first fluid input units 61 to the weight of the base material extruded by the mold subunit 42 is 0.01, and a ratio of a weight of the supercritical fluids introduced by a third one of the three first fluid input units 61 to the weight of the base material extruded by the mold subunit 42 is 0.01. The first one, the second one, and the third one of the three first fluid input units 61 are sequentially arranged in such order in the conveying direction (D11). During the period of extrusion, a ratio of a weight of the supercritical fluids introduced by the second fluid input unit 62 to the weight of the base material extruded by the mold subunit 42 is 0.01, and a ratio of a weight of the supercritical fluids introduced by the third fluid input unit 63 to the weight of the base material extruded by the mold subunit 42 is 0.005. For example, during a period for extruding 100 wt% of the melted base material, the first fluid input units 61 spaced apart sequentially in the conveying direction (D11) are adapted to respectively introduce 1.5 wt% of the supercritical fluids, 1 wt% of the supercritical fluids, and 1 wt% of the supercritical fluids during this period; the second fluid input unit 62 is adapted to introduce 1 wt% of the supercritical fluids during this period; and the third fluid input unit 63 is adapted to introduce 0.5 wt% of the supercritical fluids during this period.

Because the three first fluid input units 61 are spaced apart from each other in the conveying direction (D11) to introduce the supercritical fluids into the conveyer unit 2, solubility of the supercritical fluids in the melted base material is increased, and mixing uniformity of the supercritical fluids and the melted base material is increased. As long as the solubility and the mixing uniformity remain the same, the second rod body 72 of the threaded rod 7 may be shortened. Because the three first fluid input units 61 are respectively aligned with the first rod segment 73, the third rod segment 75, and the fifth rod segment 77 of the second rod body 72, and introduce the supercritical fluids into the conveyer unit 2, a single location between the second rod body 72 of the threaded rod 7 and the second tube portion 82 of the outer tube 8 may avoid receiving high pressure generated by an introduction of a large amount of the supercritical fluids thereto. In other words, by virtue of the first fluid input units 61 being spaced apart from each other to introduce the supercritical fluids, a maximum value of pressure at a location between the second rod body 72 and the second tube portion 82 may be reduced, thereby increasing safety during operation.

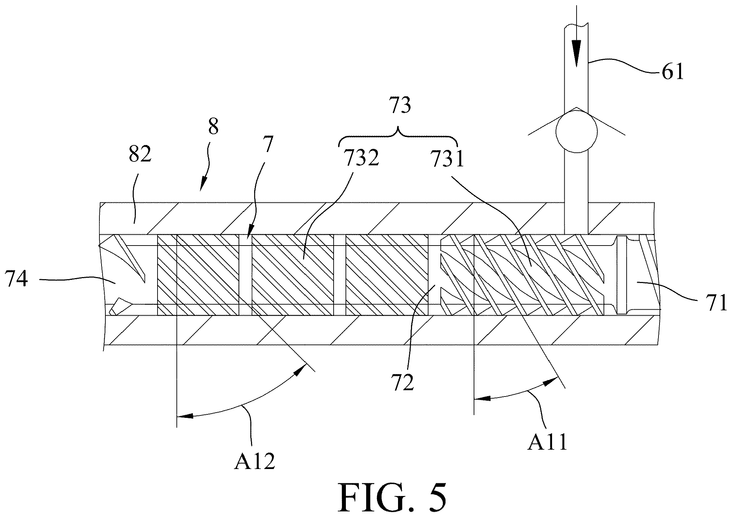

Referring back to Figures 5 to 7, the threaded rod 7 is designed to have different thread regions. The first rod body 71 of the threaded rod 7 may stably convey the melted base material toward the second rod body 72. The first rod segment 73 of the second rod body 72 is threaded in a dense manner such that the melted base material may be repeatedly kneaded, thereby enhancing a mixing effect. Because the second external thread 742 of the second rod segment 74 and the second outer thread 752 of the third rod segment 75 are discontinuous, fluidity of the melted base material may be increased, thereby facilitating the supercritical fluids to be dispersed in the melted base material. The fifth rod segment 77 may prevent the melted base material that is already properly mixed with the supercritical fluids from being unevenly mixed again.

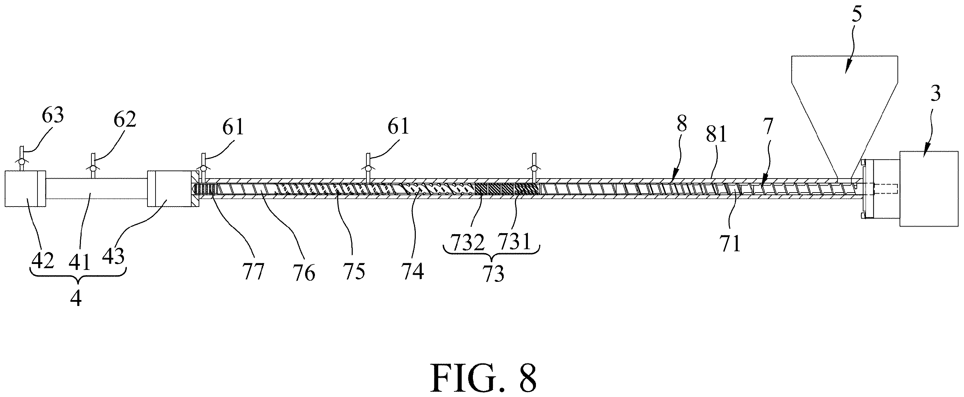

Figure 8 illustrates an extrusion apparatus according to a second embodiment of the disclosure, which has a structure generally similar to that of the first embodiment. However, in this embodiment, the pumping subunit 43 is connected to the end of the second tube portion 82 of the outer tube 8 opposite to the first tube portion 81. The cooling subunit 41 interconnects the pumping subunit 43 and the mold subunit 42.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. An extrusion apparatus including:
a conveyer unit (2) including
a conveying threaded rod (7) that extends in a conveying direction (D11), and
an outer tube (8) that is sleeved on said conveying threaded rod (7), and that has a first tube portion (81) and a second tube portion (82) disposed downstream of said first tube portion (81) in the conveying direction (D11);
a feeding unit (5) that is connected to said first tube portion (81) and that is adapted to feed a base material into a space between said conveying threaded rod (7) and said outer tube (8), said conveying threaded rod (7) being rotatable for conveying in the conveying direction (D1) the base material that is fed by said feeding unit (5) and that is melted; and
an extruding unit (4) that is connected to an end of said conveyer unit (2) opposite to said feeding unit (5) in the conveying direction (D11);
**characterized in that**:
said extrusion apparatus further includes a plurality of first fluid input units (61) that are spaced apart from each other in the conveying direction (D11) and that are connected to said second tube portion (82), said first fluid input units (61) being adapted to introduce supercritical fluids into said space between said threaded rod (7) and said outer tube (8) so that the melted base material and the supercritical fluids are mixed to be extruded by said extruding unit (4).

2. The extrusion apparatus as claimed in Claim 1, wherein:
said threaded rod (7) has a first rod body (71) and a second rod body (72) that are respectively surrounded by said first tube portion (81) and said second tube portion (82);
said second rod body (72) has a first rod segment (73), a second rod segment (74), a third rod segment (75), a fourth rod segment (76), and a fifth rod segment (77) that are arranged in the conveying direction (D11); and
said first fluid input units (61) are respectively aligned with said first rod segment (73), said third rod segment (75), and said fifth rod segment (77).

3. The extrusion apparatus as claimed in Claim 2, wherein said first rod segment (73) has an external thread pitch that is smaller than an external thread pitch of each of said second rod segment (74), said third rod segment (75), and said fourth rod segment (76).

4. The extrusion apparatus as claimed in Claim 3, wherein:
said first rod segment (73) of said second rod body (72) includes a head section (731) that is connected to said first rod body (71), and a tail section (732) that interconnects said head section (731) and said second rod segment (74) of said second rod body (72); and
said head section (731) has a first external thread lead angle (A11) that is smaller than a second external thread lead angle (A12) of said tail section (732).

5. The extrusion apparatus as claimed in any one of Claims 3 and 4, wherein:
said second rod segment (74) has a first external thread (741) that is continuous, and a second external thread (742) that is discontinuous; and
said first external thread (741) and said second external thread (742) cooperate with each other to form a double thread.

6. The extrusion apparatus as claimed in any one of Claims 3 to 5, wherein:
said third rod segment (75) has a first outer thread (751) that is continuous, and a second outer thread (752) that is discontinuous; and
said first outer thread (751) and said second outer thread (752) cooperate with each other to form a double thread.

7. The extrusion apparatus as claimed in any one of Claims 3 to 6, wherein said fifth rod segment (77) has a plurality of ring protrusions (771) that are spaced apart from each other in the conveying direction (D11).

8. The extrusion apparatus as claimed in any one of Claims 2 to 7, wherein:
said first tube portion (81) of said outer tube (8) is equal in length to said second tube portion (82); and
said first rod body (71) of said threaded rod (7) is equal in length to said second rod body (72).

9. The extrusion apparatus as claimed in any one of Claims 1 to 8, wherein:
said extruding unit (4) has
a cooling subunit (41) that is adapted to cool the base material that is conveyed from said conveyer unit (2), that is melted, and that is mixed with the supercritical fluids,
a pumping subunit (43) that is adapted for transporting the base material that is conveyed from said conveyer unit (2), that is melted, and that is mixed with the supercritical fluids, and
a mold subunit (42) that is adapted for extrusion of the base material that is conveyed from said conveyer unit (2), that is melted, that is mixed with the supercritical fluids, and that is cooled by said cooling subunit (41); and
said extrusion apparatus further includes
a second fluid input unit (62) that is connected to said cooling subunit (41) and that is adapted to introduce the supercritical fluids into said cooling subunit (41), and
a third fluid input unit (63) that is connected to said mold subunit (42) and that is adapted to introduce the supercritical fluids to said mold subunit (42).

10. The extrusion apparatus as claimed in Claim 9, wherein:
a number of said first fluid input units (61) is three;
during a period of extrusion, a ratio of a weight of the supercritical fluids introduced by a first one of said three first fluid input units (61) to a weight of the base material extruded by said mold subunit (42) is 0.015, a ratio of a weight of the supercritical fluids introduced by a second one of said three first fluid input units (61) to the weight of the base material extruded by said mold subunit (42) is 0.01, and a ratio of a weight of the supercritical fluids introduced by a third one of said three first fluid input units (61) to the weight of the base material extruded by said mold subunit (42) is 0.01, the first one, the second one, and the third one of said three first fluid input units (61) being sequentially arranged in such order in the conveying direction (D11); and
during the period of extrusion, a ratio of a weight of the supercritical fluids introduced by said second fluid input unit (62) to the weight of the base material extruded by said mold subunit (42) is 0.01, and a ratio of a weight of the supercritical fluids introduced by said third fluid input unit (63) to the weight of the base material extruded by said mold subunit (42) is 0.005.
